# EUROPÄISCHE PATENTSCHRIFT

(11) **EP 2 211 673 B1**
(45) Veröffentlichungstag und Bekanntmachung des Hinweises auf die Patenterteilung: **30.03.2011**
(21) Anmeldenummer: 08800455.1
(22) Anmeldetag: 02.10.2008
(51) Int. Cl.: A47J 43/046, A47J 43/07, A47J 43/10

(54) **MILCHSCHÄUMER MIT VERBESSERTER SCHÄUMWIRKUNG**
MILK FROTHING APPARATUS HAVING IMPROVED FROTHING EFFECT
DISPOSITIF POUR LE MOUSSAGE DU LAIT À EFFET DE MOUSSAGE AMÉLIORÉ

(30) Priorität: 05.11.2007 CH 17162007; 10.12.2007 CH 19072007
(43) Veröffentlichungstag der Anmeldung: 04.08.2010
(73) Patentinhaber: PI-DESIGN AG, 6234 Triengen (CH)
(72) Erfinder: BODUM, Jørgen, 6045 Meggen (CH)
(74) Vertreter: Detken, Andreas
(86) Internationale Anmeldenummer: PCT/CH2008/000409
(87) Internationale Veröffentlichungsnummer: WO 2009/059439

(56) Entgegenhaltungen:
- WO-A-2006/050900
- CA-A1- 2 310 180
- US-B2- 6 558 035

## Beschreibung

### Technisches Gebiet

Die vorliegende Erfindung betrifft eine Vorrichtung zum Aufschäumen eines flüssigen Lebensmittels. Da derartige Vorrichtungen meist zum Aufschäumen von Milch eingesetzt werden, wird die Vorrichtung im Folgenden auch vereinfachend als Milchschäumer bezeichnet.

### Stand der Technik

Aus dem Stand der Technik sind batteriebetriebene Milchschäumer bekannt, welche eine Antriebseinheit aufweisen, in der eine oder mehrere Batterien sowie ein elektrischer Motor untergebracht sind. Vom Antriebsteil aus erstreckt sich eine mit dem Motor verbundene lange Welle aus einem festen Draht axial nach unten. Am unteren Ende der Welle ist ein Schäumelement angebracht. Das Schäumelement kann insbesondere als toroidale Spule ausgebildet sein, die sich senkrecht zur Welle um die durch die Welle definierte Längsrichtung herum erstreckt und auf einem ringförmigen Drahtbügel geführt ist. Derartige Milchschäumer sind zum Beispiel in der US-A-2003/0177914 oder US-A-6,558,035 offenbart. Statt einer toroidalen Spule sind auch andere Arten von Schäumelementen bekannt. So offenbart zum Beispiel das US-Design Nr. 476,523 einen Milchschäumer mit einem Schäumelement, das eine sich nach unten hin stark aufweitende Kegelform aufweist, wobei an der Basis des Kegels in der Oberfläche des Schäumelements Wellen ausgebildet sind.

Derartige Milchschäumer erzeugen Schaum, indem sie Luft in die Milch einbringen und die so entstehenden Luftblasen fein zerteilen. Auf diese Weise entsteht ein Gemisch aus Milch und darin fein verteilten Luftbläschen, welches durch die Eigenschaften der Milch zu einem Schaum stabilisiert wird. Wichtig ist dabei, dass der Milchschäumer überhaupt in der Lage ist, Luft in die Milch einzubringen. Bei bekannten Milchschäumem muss der Benutzer dazu das Schäumelement zwischen dem Boden des Gefässes und der Oberfläche der Milch im Gefäss hin und her bewegen, damit einerseits sichergestellt ist, dass das Schäumelement überhaupt Luft an der Oberfläche der Milch einbringt, und damit andererseits im gesamten Gefäss die Luftblasen genügend zerkleinert werden. Würde der Benutzer dagegen das Schäumelement lediglich im Bereich des Bodens des Gefässes halten, so würde die Milch unter Umständen zwar gerührt, aber es würde nur wenig oder überhaupt kein Schaum entstehen.

Dies ist besonders dann nachteilig, wenn der Milchschäumer nicht dazu ausgebildet ist, in der Hand gehalten zu werden, sondern dazu vorgesehen ist, stationär auf einem Gefäss aufgesetzt zu werden. In diesem Falle ist es nicht ohne weiteres möglich, das Schäumelement im Betrieb zwischen dem Boden des Gefässes und der Oberfläche der Milch hin und her zu bewegen.

WO 2006/050900 offenbart einen Milchschäumer, dessen Schäumelement magnetisch angetrieben ist. Das Schäumelement ist am Boden eines von unten her beheizbaren Gefässes angeordnet und nicht in der Höhe veränderlich.

### Darstellung der Erfindung

Es ist eine Aufgabe der vorliegenden Erfindung, eine Vorrichtung zum Aufschäumen eines flüssigen Lebensmittels, insbesondere von Milch, anzugeben, die es erlaubt, das Schäumelement durch verschiedene Bereiche der auszuschäumenden Flüssigkeit zu bewegen.

Diese und andere Aufgaben werden durch eine Vorrichtung zum Aufschäumen eines flüssigen Lebensmittels mit dem Merkmalen des Anspruchs 1 gelöst. Vorteilhafte Ausgestaltungen sind in den abhängigen Ansprüchen angegeben.

Die erfindungsgemässe Vorrichtung umfasst eine Antriebseinheit sowie eine Schäumeinheit. Die Schäumeinheit weist eine Führungsstange auf, die sich mit ihrer Längsachse entlang einer Längsrichtung erstreckt und die zumindest einen Abschnitt aufweist, der als Gewindestange ausgebildet ist. Diese Führungsstange ist ortsfest gegenüber der Antriebseinheit fixierbar. Auf der Führungsstange ist ein Schäumelement angebracht, welches mit der Führungsstange in einem Gewindeeingriff steht und dadurch entlang einer Schraubenbahn auf der Führungsstange bewegbar ist. Zum Antrieb des Schäumelements ist mindestens ein Mitnehmer vorhanden, der durch die Antriebseinheit zu einer Kreisbewegung um die Längsachse der Führungsstange herum antreibbar ist und der sich derart zwischen der Antriebseinheit und dem Schäumelement erstreckt, dass das Schäumelement durch die Kreisbewegung des Mitnehmers zu einer Schraubbewegung auf der Führungsstange antreibbar ist.

Wenn das Schäumelement angetrieben wird, führt es bei dieser Vorrichtung also nicht nur eine Drehbewegung wie im Stand der Technik aus, sondern bewegt sich auf einer Schraubenbahn entlang der Längsachse der stationären Führungsstange. Die Umfangsgeschwindigkeit des Schäumelements um die Längsachse ist dabei erheblich höher als seine Translationsgeschwindigkeit in der Längsrichtung, bevorzugt mindestens um einen Faktor 10, so dass die Schäumwirkung grundsätzlich in ähnlicher Weise wie im Stand der Technik entstehen kann. Zudem bewegt sich das Schäumelement aber entlang der Drehrichtung auf oder ab. Das Schäumelement durchmischt dadurch unterschiedliche Bereiche der aufzuschäumenden Flüssigkeit, wodurch die Schäumwirkung entscheidend verbessert wird.

Bevorzugt wird die Drehrichtung des Schäumelements automatisch periodisch umgekehrt. Dazu weist die Antriebseinheit einen elektrischen Motor sowie eine Steuereinheit auf, welche dazu ausgebildet ist, die Drehrichtung des Motors selbsttätig periodisch oder nach einem anderen vorbestimmten Schema umzukehren, um auf diese Weise eine Aufwärts- und Abwärtsbewegung des Schäumelements entlang der Schaubenbahn zu erreichen. Hierzu kann die Steuereinheit bspw. dazu ausgebildet sein, nach einer vorbestimmten Anzahl von Umdrehungen des Motors dessen Drehrichtung umzukehren, und kann zur Feststellung der zurückgelegten Zahl von Umdrehungen entsprechende Bewegungsaufnehmer (zum Beispiel so genannte Encoder), wie sie aus dem Stand der Technik bekannt sind, aufweisen. Alternativ kann die Steuereinheit auch dazu ausgebildet sein, die Position des Schäumelements zu erfassen, indem zum Beispiel der Motorstrom überwacht wird. Wenn der Motorstrom stark ansteigt, ist dies ein Indiz dafür, dass das Schäumelement an einem Ende des Gewindebereichs der Führungsstange angelangt ist und eine weitere Bewegung des Schäumelements in der momentanen Richtung nicht mehr möglich ist. Die Steuereinheit kann dann dazu ausgebildet sein, bei einem Anstieg des Motorstroms die Drehrichtung des Motors umzukehren. Eine Vielzahl weiterer Ausgestaltungen der automatischen Richtungsumkehr sind selbstverständlich möglich.

Der Mitnehmer ist in einer einfachen und vorteilhaften Ausgestaltung als Mitnehmerstange ausgebildet, die sich im Wesentlichen parallel zur Längsachse der Führungsstange und in vorbestimmtem Abstand hierzu erstreckt. Diese Mitnehmerstange ist derart mit dem Schäumelement verbunden, dass dieses entlang der Längsrichtung gegenüber der Führungsstange verschiebbar ist. Vorzugsweise sind zwei Mitnehmerstangen vorhanden, die bezüglich der Längsachse auf diametral gegenüberliegenden Seiten der Führungsstange angeordnet sind. Selbstverständlich können aber auch mehr als zwei, vorzugsweise gleichmässig um die Führungsstange herum verteilte Mitnehmerstangen vorhanden sein.

Um die Mitnehmerstange in einem vorbestimmten Abstand zur Führungsstange zu halten, kann die Mitnehmerstange an ihrem von der Antriebseinheit entfernten Ende (welches im Folgenden als distales Ende bezeichnet wird) mit einem distalen Lagerelement verbunden sein, welches drehbar auf der Führungsstange gelagert ist. Auf diese Weise kann das distale Ende der Mitnehmerstange auf einer Kreisbahn geführt an der Führungsstange fixiert werden.

Das Schäumelement ist vorzugsweise in ähnlicher Weise ausgestaltet, wie dies von batteriebetriebenen Milchschäumem aus dem Stand der Technik schon bekannt ist. Das Schäumelement kann insbesondere eine toroidal gebogene Spule oder Schraubenfeder umfassen, welche die Längsachse der Führungsstange umgebend angeordnet ist und mit einem Trägerelement verbunden ist, welches im Gewindeeingriff mit der Führungsstange steht. Das Trägerelement kann dann mindestens eine axiale Durchgangsöffnung umfassen, durch welche hindurch sich der Mitnehmer in der Längsrichtung verschiebbar erstreckt. Eine solche Ausgestaltung bietet sich insbesondere dann an, wenn der oder die Mitnehmer als Mitnehmerstangen ausgebildet sind. Im Inneren der Drahtspule kann insbesondere ein ringförmiger Drahtbügel oder Haltering verlaufen, welcher die Längsachse der Führungsstange umgibt. Das Trägerelement umfasst dann vorzugsweise eine Führungsmutter, die in Gewindeeingriff mit der Führungsstange steht und über mindestens einen Haltesteg mit dem Haltering verbunden ist. Der Haltesteg wird dann vorzugsweise mindestens eine axiale Durchgangsöffnung aufweisen, durch welche hindurch sich der Mitnehmer in der Längsrichtung verschiebbar erstreckt. Selbstverständlich sind aber auch andere Arten der Verbindung des Schäumelements mit der Führungsstange denkbar, und das Schäumelement kann auch auf andere Weise als mit einer toroidal gebogenen Schraubenfeder ausgestaltet sein.

Um ein Verklemmen des Schäumelements zu verhindern, falls das Schäumelement eines der Enden des Gewindes der Führungsstange erreicht, kann die Führungsstange in mindestens einem Bereich, der an einen als Gewindestange ausgebildeten Abschnitt angrenzt, einen Freistich (d.h. einen Bereich mit geringerem Aussendurchmesser als demjenigen der Gewindestange) aufweisen, der es dem Schäumelement erlaubt, im Bereich des Freistichs frei zu drehen, ohne dabei eine Schraubenbewegung auszuführen.

Um sicherzustellen, dass das Schäumelement im Bereich eines Freistichs nach einer Bewegungsumkehr des Antriebs wieder in Gewindeeingriff mit der Gewindestange kommt, kann die Vorrichtung ein elastisches Element aufweisen, um auf das Schäumelement eine Kraft in Richtung des als Gewindestange ausgebildeten Abschnitts der Führungsstange auszuüben, wenn sich das Schäumelement im Bereich des Freistichs befindet. Das elastische Element ist in einer einfachen Ausgestaltung als Schraubenfeder mit einer Mehrzahl von Windungen ausgestaltet, die sich um die Führungsstange herum erstrecken.

An seinem der Antriebseinheit zugewandten Ende (welches im Folgenden als proximales Ende bezeichnet wird) ist der Mitnehmer in einer vorteilhaften Ausgestaltung starr mit einem Zahnrad verbunden. Dieses ist drehbar an der Führungsstange gelagert und lässt sich in Eingriff mit einem Antriebszahnrad bringen, welches wiederum direkt oder indirekt durch den Motor zu einer Drehung antreibbar ist. Es sind aber auch andere Arten der Kraftübertragung vom Motor auf den Mitnehmer denkbar, zum Beispiel über einen Reibschluss, einen Antriebsriemen usw. oder über eine magnetische Kraftübertragung, wie nachfolgend noch näher beschrieben.

Vorzugsweise ist die Schäumeinheit mit der Antriebseinheit mechanisch verbindbar und von dieser abnehmbar ausgebildet. Dazu kann die Schäumeinheit unmittelbar an der Antriebseinheit gehalten sein, zum Beispiel über eine drehfeste Steckverbindung zwischen dem Gehäuse der Antriebseinheit und der Führungsstange. Es ist aber auch denkbar, dass die Schäumeinheit von einem anderen Teil der Vorrichtung gehalten ist und lediglich Mittel zur Kraftübertragung zwischen der Antriebseinheit und der Schäumeinheit vorhanden sind.

Gemäss einer vorteilhaften Ausführungsform erfolgt die Drehmomentenübertragung zwischen Antriebseinheit und Schäumeinheit auf magnetischem Wege, d.h. die Antriebseinheit und die Schäumeinheit wirken derart zusammen, dass durch einen magnetischen Effekt ein Drehmoment von der Antriebseinheit auf den Mitnehmer der Schäumeinheit übertragbar ist. Dazu kann die Antriebseinheit einen elektrischen Motor und ein erstes magnetisches Übertragungselement mit mindestens einem Permanentmagneten aufweisen, welches durch den elektrischen Motor um eine Drehbewegung um die Längsachse der Führungsstange antreibbar ist. Denkbar sind jedoch auch andere Mittel zur Erzeugung eines rotierenden Magnetfeldes, z.B. eine Spulenanordnung, die durch zeitlich veränderliche Ströme ein rotierendes Magnetfeld erzeugt. Derartige Spulenanordnungen sind aus dem Bereich der bürstenlosen elektrischen Motoren wohlbekannt. Auf diese Weise können bewegliche Elemente in der Basiseinheit weitgehend vermieden werden. Die Schäumeinheit umfasst vorzugsweise ein (zweites) magnetisches Übertragungselement mit mindestens einem Permanentmagneten, welches drehbar um die Längsachse der Führungsstange angeordnet und mit dem Mitnehmer der Schäumeinheit verbunden ist.

Der oder die Permanentmagnete sind derart im jeweiligen Übertragungselement angeordnet, dass das vom Übertragungselement erzeugte Magnetfeld entlang einer Umfangsrichtung veränderlich ist (in anderen Worten, mit dem Drehwinkel um die Längsachse veränderlich, also nicht zylindersymmetrisch ist).

In einer vorteilhaften Ausgestaltung ist die Vorrichtung als stationäres Gerät ausgestaltet. Sie umfasst ein nach oben offenes Gefäss zur Aufnahme des aufzuschäumenden flüssigen Lebensmittels, wobei das Gefäss einen Boden und eine umlaufende Seitenwand aufweist. Die Antriebseinheit ist unterhalb des Bodens des Gefässes, z.B. in einer Basiseinheit, die entweder das Gefäss hält oder selbst das Gefäss bildet, angeordnet. Die Schäumeinheit erstreckt sich von oben her in das Gefäss hinein. Gerade bei einem solchen Milchschäumer ist eine magnetische Drehmomentenübertragung von besonderem Vorteil, da jegliche mechanische Durchführung einer Welle sowie entsprechende Dichtmassnahmen entfallen können. Eine solche Anordnung ist selbst dann vorteilhaft, wenn die Schäumeinheit auf eine ganz andere Weise als der vorstehend dargestellten Weise ausgestaltet ist.

Die Vorrichtung kann einen Deckel umfassen, der dazu ausgebildet ist, derart auf dem Gefäss angeordnet zu werden, dass der Deckel das Gefäss von oben her mindestens teilweise überdeckt. Der Deckel kann dabei abnehmbar sein oder direkt oder indirekt beweglich mit der Antriebseinheit verbunden, z.B. an der Basiseinheit angebracht, insbesondere angelenkt sein. Die Schäumeinheit ist dann vorzugsweise am Deckel befestigt, insbesondere abnehmbar befestigt.

Das erste magnetische Übertragungselement ist in diesem Fall vorzugsweise unterhalb des Bodens des Gefässes angeordnet, und das zweite magnetische Übertragungselement ist entsprechend in einem proximalen Endbereich der Schäumeinheit angeordnet, der im Betrieb der Vorrichtung dem Boden des Gefässes benachbart ist.

Um die Flüssigkeit in der Vorrichtung vor dem Aufschäumen und/oder während dem Aufschäumen aufzuheizen, umfasst die Vorrichtung vorzugsweise mindestens ein Heizelement, welches geeignet ist, den Boden des Gefässes zu beheizen. Hierbei kann es sich z.B. um ein Heizelement in Dickfilmtechnologie handeln, das direkt auf der Unterseite des Bodens aufgebracht ist, um ein ummanteltes Heizelement, um einen Infrarotheizer, einen induktiven Heizer oder eine Kombination aus diesen.

Um die Reinigung der Vorrichtung zu erleichtern, kann ein Einsatz vorgesehen sein, dessen Form im Wesentlichen der inneren Form des Gefässes entspricht und der herausnehmbar in das Gefäss eingelegt ist. Bevorzugt ist der Einsatz flexibel, so dass er sich der inneren Form des Gefässes anpasst und sich an die Gefässwand anschmiegen kann. Der Einsatz kann insbesondere aus Silikongummi oder einem ähnlichen lebensmittelechten, flexiblen, leicht zu reinigenden Material bestehen.

### Kurze Beschreibung der Zeichnungen

Bevorzugte Ausführungsformen der Erfindung werden im Folgenden anhand der Zeichnungen beschrieben, in denen zeigen:
- Fig. 1: eine perspektivische Teilansicht eines Milchschäumers gemäss einer ersten Ausführungsform der vorliegenden Erfindung;
- Fig. 2: einen schematischen Längsschnitt des Milchschäumers der Fig. 1 in einer zentralen Ebene, welche durch die Mitnehmerstangen der Schäumeinheit verläuft;
- Fig. 3: einen schematischen Längsschnitt in einer Ebene, welche gegen- über der Schnittebene der Fig. 2 um 90° um die Längsachse ge- dreht ist;
- Fig. 4: einen schematischen zentralen Längsschnitt durch einen Milch- schäumer gemäss einer zweiten Ausführungsform;
- Fig. 5: eine schematische Seitenansicht einer Schäumeinheit gemäss einer Variante der zweiten Ausführungsform; sowie
- Fig. 6-8: vergrösserte Ausschnitte aus der Fig. 5.

### Ausführliche Beschreibung bevorzugter Ausführungsformen

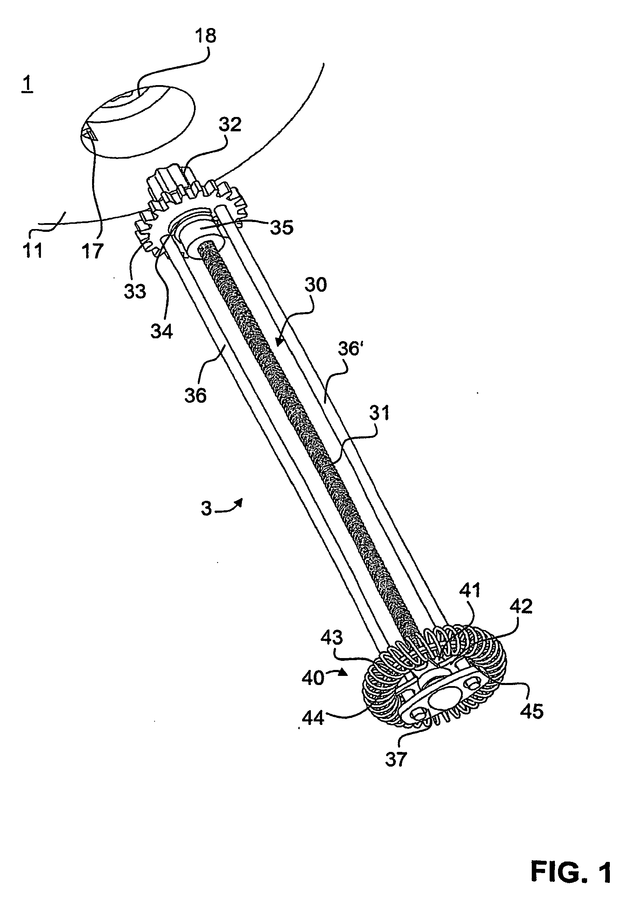

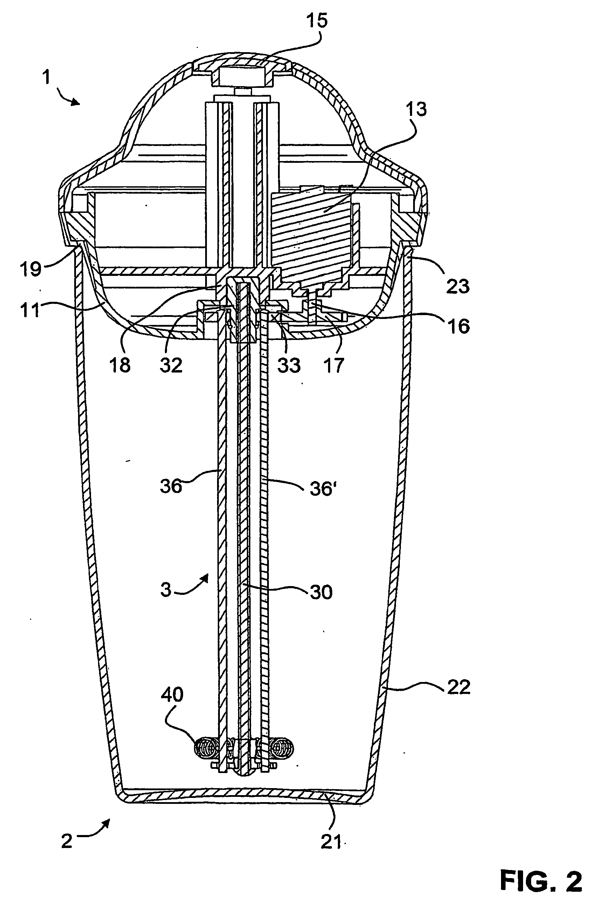

In den Figuren 1 bis 3 ist ein erstes Ausführungsbeispiel eines erfindungsgemässen Milchschäumers dargestellt. Der Milchschäumer umfasst eine Antriebseinheit 1, welche mit einer ringförmigen Auflagefläche 19 ihres Gehäuseunterteils 11 auf der Oberkante 23 eines Gefässes 2 mit Boden 21 und umlaufender Seitenwand 22 aufliegt. Von der Antriebseinheit 1 aus erstreckt sich eine abnehmbare Schäumeinheit 3 vertikal nach unten in das Gefäss 2 hinein.

Die Antriebseinheit 1 weist ein Batteriefach für zwei Standardbatterien 14 der Grösse AA auf. Des Weiteren sind in der Antriebseinheit ein elektrischer Motor 13 sowie eine zeichnerisch nicht dargestellte Steuereinheit untergebracht. Nach oben hin ist die Antriebseinheit durch ein Gehäuseoberteil 12 abgeschlossen, an dessen Oberseite ein nur schematisch angedeuteter Druckschalter 15 angeordnet ist. Die Steuereinheit und der Motor 13 lassen sich durch den Druckschalter 15 ein- und ausschalten. Das Gehäuseunterteil 11 begrenzt eine nach unten hin offene Aufnahmebuchse 18 für das obere Ende der Schäumeinheit 3.

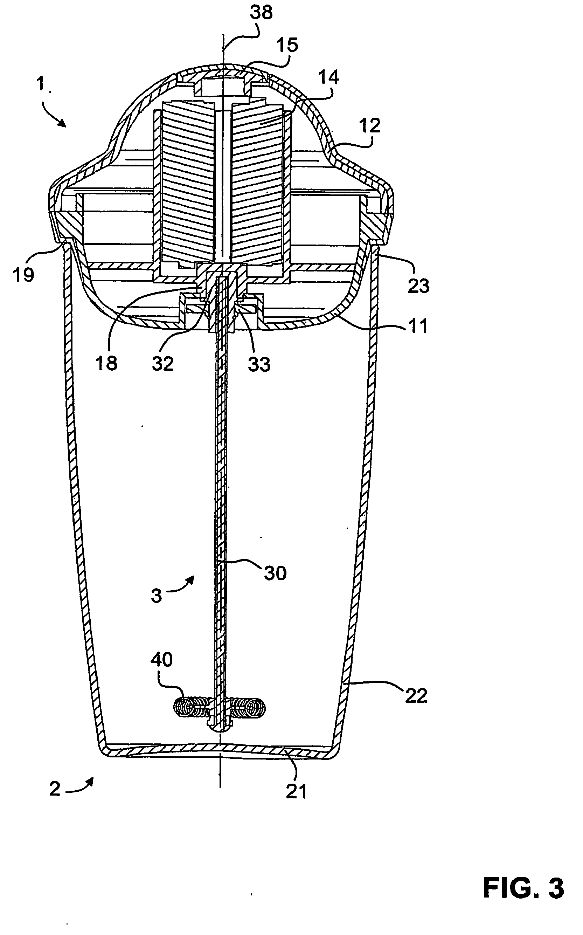

Die Schäumeinheit 3 umfasst eine zentrale Führungsstange 30, die eine zentrale Längsachse 38 (vgl. Fig. 3) definiert und über den grössten Teil ihrer Länge hinweg einen Gewindebereich 31 mit einem als Feingewinde ausgebildetem Aussengewinde aufweist. An ihrem der Antriebseinheit 1 zugewandten proximalen Ende weist die Führungsstange 30 eine Verdickung 32 mit polygonalsternförmigem Querschnitt auf, welche in die entsprechend komplementär geformte Aufnahmebuchse 18 der Antriebseinheit einschiebbar ist. In einem sich nach unten hin an die Verdickung 32 anschliessenden Lagerbereich 35 ist ein Zahnrad 33 auf der Führungsstange 30 drehbar angebracht und wird durch einen Klemmring 34 axial fixiert. Im Zahnrad 33 sind radial versetzt zur Längsachse die Enden von zwei Mitnehmerstangen 36, 36' aufgenommen, welche sich beabstandet parallel zur Führungsstange auf diametral gegenüberliegenden Seiten der Führungsstange nach unten erstrecken. Die Mitnehmerstangen sind mit ihren distalen Enden in einem distalen Lagerelement 37 gehalten, welches wie das Zahnrad 33 drehbar, aber axial fixiert auf der zentralen Führungsstange 30 angebracht ist. Auf diese Weise führen die Mitnehmerstangen 36, 36' eine Kreisbewegung um die zentrale Längsachse der Führungsstange 30 herum aus, wenn das Zahnrad 33 zu einer Drehung um die Führungsstange angetrieben wird.

Mit dem Gewindebereich 31 der Führungsstange 30 steht ein Schäumelement 40 in einem Gewindeeingriff. Das Schäumelement 40 umfasst ein Trägerelement in Form einer zentrale Führungsmutter 41, welche leichtgängig im Gewindeeingriff mit der Führungsstange 30 steht. Von dieser Führungsmutter aus erstrecken sich gleichmässig über den Umfang verteilt vier Haltestege 42 radial nach aussen. Diese Haltestege sind mit einem Haltering 43 verbunden, dessen zentrale Ringachse mit der Längsachse der Führungsstange 30 zusammen fällt und welche sich somit um die Längsachse herum erstreckt. Auf dem Haltering 43 ist eine toroidale Drahtspule 44 gehalten, wie sie von Milchschäumern aus dem Stand der Technik bekannt ist. Die Haltestege 42 weisen axial verlaufende Durchgangsöffnungen 45 auf. Durch die Durchgangsöffnungen von zwei diametral gegenüberliegenden Haltestegen hindurch erstrecken sich die beiden Mitnehmerstangen 36, 36'. Die Dimensionen sind dabei so gewählt, dass das Schäumelement 40 gegenüber der Mitnehmerstangen axial längsverschieblich ist.

Zur Inbetriebnahme wird die Schäumeinheit 3 mit der Antriebseinheit 1 verbunden, indem sie mit der Verdickung 32 der Führungsstange 30 in die Buchse 18 eingeschoben wird. Hierdurch wird die Führungsstange gegenüber dem Gehäuse dreh- und verschiebefest festgelegt, und das auf der Führungsstange drehbare montierte Zahnrad 33 der Schäumeinheit gelangt mit einem radial versetzt angeordneten Antriebszahnrad 17 der Antriebseinheit in Eingriff. Das Antriebszahnrad 17 ist unmittelbar auf der Welle 16 des elektrischen Antriebsmotors 13 montiert; es kann aber auch ein Getriebe zwischengeschaltet sein. Durch Eindrücken des Druckschalters 15 wird der Milchschäumer eingeschaltet. Der Antriebsmotor 13 beginnt, durch die Steuereinheit gesteuert, das Antriebszahnrad 17 in Drehung zu versetzen. Dieses überträgt die Drehbewegung auf das Zahnrad 33 der Schäumeinheit. Hierdurch werden die Mitnehmerstangen 36 in eine Kreisbewegung um die zentrale Führungsstange versetzt. Bei dieser Kreisbewegung nehmen sie das Schäumelement 40 mit, welches dadurch eine Schraubenbewegung auf dem Gewindebereich 31 der Führungsstange 30 ausführt.

Nach einer vorbestimmten Zahl von Umdrehungen ändert die Steuereinheit die Drehrichtung des Motors 13, zum Beispiel indem die Versorgungsspannung des Motors umgepolt wird. Hierdurch führt das Schäumelement 40 nun eine Schraubbewegung in die entgegengesetzte Richtung aus, bis es wieder in der Ausgangslage ankommt. Durch periodisches Umschalten der Drehrichtung des Motors wird so eine periodische Aufwärts- und Abwärtsbewegung, überlagert mit einer schnellen Drehbewegung, des Schäumelements 40 entlang der Führungsstange 30 erreicht. Dabei ist die Umfangsgeschwindigkeit des Schäumelements in der Drehrichtung erheblich grösser als die axiale Geschwindigkeit entlang der Längsachse.

Statt die Drehrichtung des Motors nach einer vorbestimmten Zahl von Umdrehungen zu ändern, kann die Steuereinheit auch so ausgebildet sein, dass sie, zum Beispiel durch einen Stromanstieg des Motors, erkennt, wenn das Schäumelement am oberen Ende des Gewindebereichs 31 angekommen ist und sich nicht mehr weiter drehen kann, und daraufhin die Drehrichtung des Motors umkehrt. Auch ist es denkbar, an der Antriebseinheit eine Einstelleinrichtung vorzusehen, mit der der axiale Bewegungsbereich des Schäumelements, abhängig von der Menge an Milch im Gefäss 2, eingestellt werden kann, mit der also festgelegt wird, nach wie viel Umdrehungen des Motors bzw. des Schäumelements die Drehrichtung umgekehrt wird. Eine Vielzahl von weiteren Variationen der Steuerung ist selbstverständlich möglich. Auch ist es denkbar, dass der Benutzer die Drehrichtung manuell umkehrt, z.B. durch Druck auf eine entsprechende Taste.

Im vorliegenden Beispiel wird die Schäumeinheit 3 unmittelbar mit der Antriebseinheit 1 verbunden, indem sie in diese eingesteckt wird. Selbstverständlich sind auch andere Arten der Verbindung möglich, z.B. Einschrauben oder Einklicken. Die Antriebseinheit muss nicht notwendig zur Auflage auf einem Gefäss ausgebildet sein, sondern kann z.B. auch dazu ausgebildet sein, in der Hand gehalten zu werden.

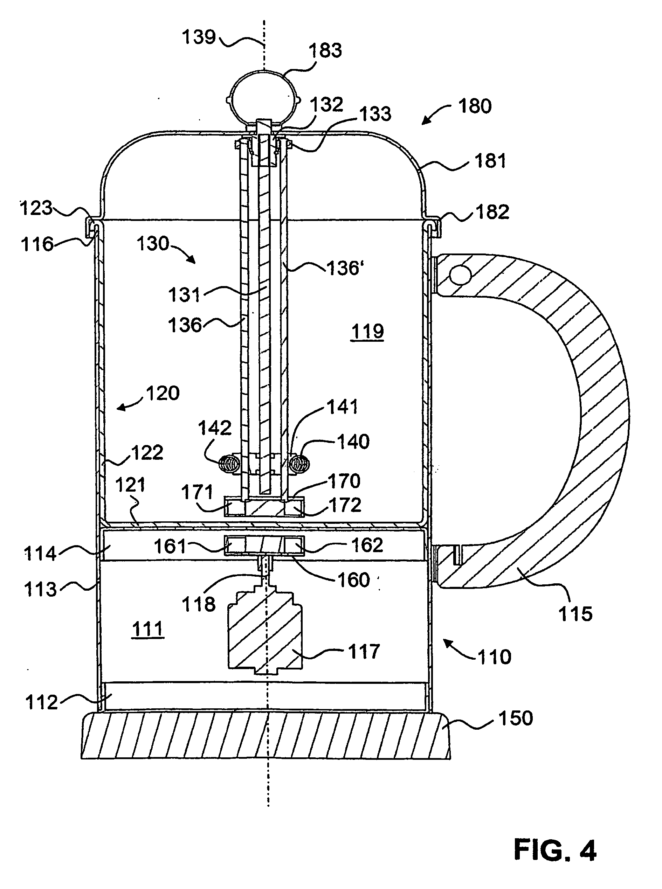

Ein zweites Ausführungsbeispiel eines erfindungsgemässen Milchschäumers ist in der Fig. 4 dargestellt. Der Milchschäumer umfasst in dieser Ausführungsform einen Sockel 150, auf den eine Basiseinheit 110 abnehmbar aufgesetzt ist. Mit dem Sockel 150 ist eine nicht zeichnerisch dargestellte elektrische Anschlussleitung zum Anschluss an ein haushaltsübliches elektrisches Stromnetz verbunden. Der Sockel umfasst des Weiteren ein ebenfalls nicht zeichnerisch dargestelltes elektrisches Kontaktelement, um eine elektrische Verbindung mit der Basiseinheit 110 herzustellen. In der Basiseinheit ist dementsprechend ein dazu komplementäres Kontaktelement ausgebildet. Derartige Paare von Kontaktelementen sind aus dem Stand der Technik wohlbekannt und werden dort insbesondere für Wasserkocher eingesetzt.

Die Basiseinheit 110 bildet ein Gefäss 119 von kreiszylindrischer Grundform mit einem Gefässboden 114 und einer umlaufenden Seitenwand 113. Unterhalb des Gefässbodens befindet sich, seitlich ebenfalls durch die durchgehende Seitenwand 113 begrenzt, eine Antriebseinheit 111, die in der Fig. 4 stark schematisiert dargestellt ist. Die Antriebseinheit umfasst eine nicht zeichnerisch dargestellte Steuereinheit, ebenfalls nicht dargestellte Bedienelemente, z.B. in Form eines Ein-/Ausschalters, sowie einen elektrischen Motor 117. Auf der Motorwelle 118 des Motors 117 ist ein erstes magnetisches Übertragungselement 160 montiert, welches nachfolgend noch näher diskutiert wird. Ausserdem befindet sich auf der Unterseite des Bodens 114 mindestens ein Heizelement, z.B. in Form eines handelsüblichen gekapselten Heizelement oder in Form eines Dickfilmheizers, der direkt auf dem Boden 114 aufgebracht ist. Derartige Heizelemente sind aus dem Stand der Technik bekannt.

Im Gefäss 119 ist ein becherförmiger, nach oben offener Einsatz 120 aus Silikongummi eingesetzt, der im Folgenden auch als Silikoneinsatz bezeichnet wird. Der Silikoneinsatz ist in seiner Form und Grösse so ausgestaltet, dass er von innen mit seinem Boden 121 flächig auf dem Boden 114 des Gefässes 119 aufliegt und mit seiner umlaufenden Seitenwand 122 an der Seitenwand 113 des Gefässes 119 anliegt. Der obere Rand 123 ist nach aussen umgestülpt ausgebildet und übergreift die Oberkante des Gefässes 119, welche durch den oberen Rand 116 der Gefässseitenwand gebildet wird. Auf diese Weise wird der Silikoneinsatz 120 sicher im Gefäss 119 gehalten. Es lässt sich zu Reinigungszwecken leicht und ohne Werkzeug aus dem Gefäss entnehmen. Dank seiner hohen Beständigkeit gegen Wärme und Reinigungsmittel und dank seiner schmutzabweisenden Oberflächeneigenschaften lässt sich der Silikoneinsatz leicht unter fliessendem Wasser oder in der Geschirrspülmaschine reinigen. Bevorzugt besteht der Einsatz aus naturfarbenem Silikongummi mit einer Härte von z.B. Shore A 70, er kann aber auch aus einem anderen gummiartigen, lebensmittelechten Material mit ähnlichen Eigenschaften wie Silikongummi gefertigt sein.

Auf dem oberen Rand des Silikoneinsatzes liegt ein Deckel 180 auf, welcher eine gewölbte Deckwand 181 sowie einen umlaufenden Randbereich 182 aufweist; welcher eine ringförmige Auflagefläche zur Auflage auf dem Rand des Silikoneinsatzes bildet. Am Deckel ist zentral ein Knauf oder Knopf 183 angebracht, der zur Unterseite des Deckels hin offen ist. Dieser Knauf dient als Aufnahme zur Befestigung einer Schäumeinheit 130. Hierzu weist die Schäumeinheit 130 an ihrem oberen Ende ein oberes Lagerelement 132 auf, das mit seinem oberen Endbereich in den Knauf hineinragt und dort durch einen Reibschluss oder eine lösbare Rastverbindung gehalten wird.

Die Schäumeinheit ist grundsätzlich ähnlich wie die Schäumeinheit des ersten Ausführungsbeispiels aufgebaut. Sie umfasst eine zentrale Führungsstange 131 in Form einer Gewindestange, die mit ihrem oberen Ende im Lagerelement 132 verankert ist. Die Führungsstange definiert eine zentrale Längsachse 139. Auf dem Lagerelement 132 ist drehbar ein Trägerrad montiert und wird dort durch einen Klemmring axial verschiebefest gehalten. Zwei Mitnehmerstangen 136, 136' sind mit ihren oberen Enden in dem Trägerrad 133 gehalten und erstrecken sich beabstandet parallel zur Führungsstange auf diametral gegenüberliegenden Seiten der Führungsstange. An ihren unteren Enden sind die Mitnehmerstangen mit einem oberen Übertragungselement 170 verbunden, welches nachfolgend noch näher erläutert wird. Auf diese Weise ist der Abstand der Mitnehmerstangen sowohl am oberen als auch am unteren Ende fixiert, und die Mitnehmerstangen können eine Kreisbewegung um die zentrale Führungsstange herum ausführen.

Auf der Führungsstange läuft ein Schäumelement 140. Dieses umfasst einen Träger 141, der ein Innengewinde aufweist, welches mit dem Aussengewinde der Führungsstange in leichtgängigem Eingriff steht, sowie eine toroidal gebogene, helikale Drahtspule 142, wie sie von Milchschäumern aus dem Stand der Technik bekannt ist. Der Träger weist zwei diametral gegenüberliegende, axiale Durchgangsöffnungen auf, durch welche sich die beiden Mitnehmerstangen 136, 136' hindurch axial leicht verschiebbar erstrecken. Bei einer Kreisbewegung der Mitnehmerstangen nehmen diese das Schäumelement 140 mit, welches entsprechend eine Schraubenbewegung auf der Führungsstange 131 ausführt.

Der Motor 117 der Antriebseinheit 111 erzeugt im Betrieb eine Antriebsdrehbewegung, welche durch die zusammenwirkenden magnetischen Übertragungselemente 160, 170 auf die Schäumeinheit übertragen wird. Dazu enthält jedes der Übertragungselemente 160, 170 mindestens einen Permanentmagneten, vorzugsweise mindestens zwei über den Umfang verteilte Permanentmagnete. Dieser Magnet bzw. diese Magnete sind derart angeordnet, dass entlang der Umfangsrichtung (d.h. entlang eines Kreises um die Längsachse der Motorwelle herum) der Nord- und der Südpol des bzw. der Magnete abwechseln. In anderen Worten erzeugt jedes der Übertragungselemente ein Magnetfeld, welches entlang der Umfangsrichtung abwechselnd entgegengesetzte Pole aufweist, oder allgemeiner ausgedrückt, ein Magnetfeld, welches nicht zylindersymmetrisch um die Längsachse ist.

Bei einer Drehung des ersten (unteren) Übertragungselements 160 wirken magnetische Kräfte zwischen den beiden Übertragungselementen, welche bewirken, dass auch das zweite (obere) Übertragungselement 170 zu einer Drehung mitgenommen wird. Auf diese Weise wird die Drehbewegung der Motorwelle 118 auf die Schäumeinheit 130 übertragen und bewirkt dort eine Kreisbewegung der Mitnehmerstangen 136, 136' und somit letztlich eine Schraubenbewegung des Schäumelements 140.

Als Magnete der Übertragungselemente 160 bzw. 170 können prinzipiell handelsübliche Ferritmagnete verwendet werden. Bevorzugt werden aber Permanentmagnete mit höherer Koerzitivfeldstärke bzw. höherem Energieprodukt eingesetzt, z.B. auf der Basis einer Neodym-Eisen-Bor-Legierung (NdFeB), insbesondere Nd₂Fe₁₄B. Derartige Magnete sind aus dem Stand der Technik wohlbekannt. Sie können pulvermetallurgisch hergestellt oder kunststoffgebunden sein. Um die Magnete vor korrodierenden Einflüssen zu schützen, können sie mit einer Schutzschicht überzogen und/oder mit einem Kunststoff gekapselt sein. Ein derartige Kapselung ist insbesondere für das obere Übertragungselement 170 sinnvoll, da dieses mit der Milch in Berührung kommt. Um die elektromagnetische Verträglichkeit (EMV) zu verbessern und insbesondere Störungen des Motors und anderer elektrischer Geräte zu vermeiden, kann der Bereich der Magnete, insbesondere in der Basiseinheit, magnetisch abgeschirmt sein, z.B. durch eine weichmagnetische Kapselung des Bereichs seitlich und unterhalb des unteren Übertragungselements.

Das rotierende Übertragungselement 160 erzeugt also ein rotierendes, nicht rotationssymmetrisches Magnetfeld, welches auf das anzutreibende Übertragungselement 170 ein Drehmoment erzeugt und dieses so durch magnetische Wechselwirkungen mitnimmt. Statt durch rotierende Permanentmagnete kann ein solches antreibendes Magnetfeld auch auf andere Weise erzeugt werden, z.B. durch eine Spulenanordnung, die durch zeitlich veränderliche Ströme ein rotierendes Magnetfeld erzeugt. Derartige Spulenanordnungen sind aus dem Bereich der bürstenlosen elektrischen Motoren wohlbekannt. Auf diese Weise können bewegliche Elemente in der Basiseinheit weitgehend vermieden werden.

Um die Magnetfelder zwischen den Übertragungselementen möglichst wenig zu stören, ist der Gefässboden 114 vorzugsweise aus einem nur schwach magnetischen oder nichtmagnetischen Material wie z.B. nichtmagnetischem Edelstahl gefertigt.

Die Übertragungselemente weisen vorzugsweise einen Durchmesser von ca. 15 bis 30 mm auf. Der axiale Abstand der Magnete in den Übertragungselementen beträgt vorzugsweise ca. 5 bis 15 mm.

Die magnetische Drehmomentenübertragung zwischen Antriebseinheit und Schäumeinheit ermöglicht es, die Form des Gefässes 119 weitgehend beliebig zu gestalten. Anders als im Stand der Technik sind keine Durchgangsöffnungen für Antriebselemente oder dergleichen im Gefässboden nötig, und eine entsprechende Dichtung kann entfallen. Da die Schäumeinheit am Deckel gehalten ist, können auch jegliche Strukturen zur Fixierung oder Führung des Schäumelements am Gefässboden oder an der Gefässwand entfallen. Insbesondere wird es so möglich, den Gefässboden und die Gefässwand vollständig glatt auszuführen, ohne zapfenartige Vorsprünge, wie sie aus dem Stand der Technik im Zusammenhang mit magnetgetriebenen Milchschäumem bekannt sind.

Dies ermöglicht es wiederum, eine möglichst einfache Form für den Silikoneinsatz 120 zu wählen, hier eine einfache, becherartige Form ohne irgendwelche Vorsprünge im Boden. Eine solche Form ermöglicht eine besonders leichte Reinigung und Handhabung sowie eine gute Wärmeübertragung vom Heizelement durch den Einsatz hindurch zur aufzuschäumenden Flüssigkeit.

Im Betrieb wird zunächst bei abgenommenem Deckel 180 der Silikoneinsatz 120 in das Gefäss 119 eingelegt. Sodann wird die aufzuschäumende Flüssigkeit, insbesondere Milch, in den Silikoneinsatz eingefüllt. Durch das Eigengewicht der Milch wird insbesondere der Boden 121 der Einsatzes 120 flach gegen den Boden 114 des Gefässes 119 gepresst, so dass eine gute Wärmeübertragung vom Heizelement zur Milch gewährleistet ist. Nun wird der Deckel 180 mit der darin eingesteckten Schäumeinheit 130 aufgesetzt, und das Gerät wird eingeschaltet. Dabei wird dem Heizelement Strom zugeführt, so dass dieses beginnt, die Milch zu erwärmen. Gleichzeitig wird der Motor 117 in Drehung versetzt, um das Schäumelement 140 periodisch auf seiner Schraubenbahn aufwärts und abwärts zu bewegen und so die Milch während des Aufheizvorgangs zu rühren und schliesslich zu Schaum zu schlagen. Nach einer vorbestimmten Zeit oder beim Erreichen einer vorbestimmten Temperatur wird die Stromzufuhr des Heizelements unterbrochen. Sobald die Milch vollständig aufgeschäumt ist, wird auch der Motor 117 angehalten. Der Deckel 180 mit der darin gehaltenen Schäumeinheit wird nun abgenommen, und die fertig aufgeschäumte Milch kann serviert werden, indem die Basiseinheit 110 vom Sockel 150 abgenommen wird.

Zur Reinigung wird einerseits die Schäumeinheit vom Deckel abgenommen und unter fliessendem Wasser gereinigt. Andererseits wird der +Silikoneinsatz aus dem Gefäss 119 herausgenommen und ebenfalls unter fliessendem Wasser oder in der Geschirrspülmaschine gereinigt. Eine separate Reinigung der Basiseinheit mit ihren empfindlichen elektrischen und mechanischen Komponenten kann im Regelfall dagegen entfallen, da alle mit der Milch in Berührung kommenden Teile leicht von der Basiseinheit entfernt werden können.

Die Steuerung des Motors 117 während des Aufheizens und während des Schäumens erfolgt vorzugsweise wie im vorstehend beschriebenen ersten Ausführungsbeispiel. Insbesondere kann vorgesehen sein, dass die Steuereinheit jeweils nach einer vorbestimmten Zahl von Umdrehungen die Drehrichtung des Motors 117 ändert, zum Beispiel indem die Versorgungsspannung des Motors periodisch umgepolt wird. Hierdurch führt das Schäumelement 140 eine periodische Aufwärts- und Abwärtsbewegung, überlagert mit einer schnellen Drehbewegung, aus. Dabei ist die Umfangsgeschwindigkeit des Schäumelements in der Drehrichtung wiederum erheblich grösser als die axiale Geschwindigkeit entlang der Längsachse.

Statt die Drehrichtung des Motors nach einer vorbestimmten Zahl von Umdrehungen zu ändern, kann die Steuereinheit auch in diesem Ausführungsbeispiel so ausgebildet sein, dass sie, zum Beispiel durch einen Stromanstieg des Motors, erkennt, wenn das Schäumelement am oberen Ende des Gewindebereichs der Führungsstange 131 angekommen ist und sich nicht mehr weiter drehen kann, und daraufhin die Drehrichtung des Motors umkehrt. Auch ist es denkbar, an der Antriebseinheit eine Einstelleinrichtung vorzusehen, mit der der axiale Bewegungsbereich des Schäumelements, abhängig von der Menge an Milch im Gefäss 2, eingestellt werden kann, mit der also festgelegt wird, nach wie viel Umdrehungen des Motors bzw. des Schäumelements die Drehrichtung umgekehrt wird. Eine Vielzahl von weiteren Variationen der Steuerung ist selbstverständlich möglich. Auch ist es denkbar, dass der Benutzer die Drehrichtung manuell umkehrt, z.B. durch Druck auf eine entsprechende Taste.

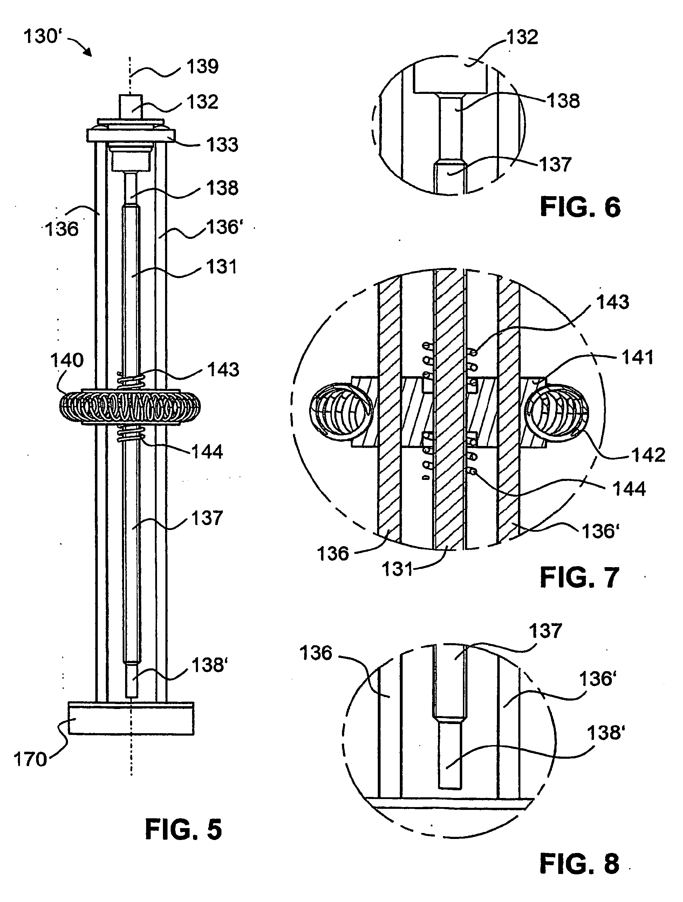

Eine Variante der Schäumeinheit des zweiten Ausführungsbeispiels ist in den Figuren 5 bis 8 dargestellt. Die Führungsstange 131 weist in dieser Variante zwei Freistiche 138, 138' auf, d.h. Bereiche mit gegenüber dem Gewindebereich 137 reduziertem Aussendurchmesser. Wenn das Schäumelement 140 in den Bereich eines dieser Freistiche gelangt, gerät es ausser Eingriff mit dem Gewindebereich 137 und kann frei drehen. Auf diese Weise wird ein Verklemmen des Schäumelements 140 auf der Führungsstange für den Fall vermieden, dass die Drehrichtung des Motors nicht rechtzeitig umgekehrt wird, bevor das Schäumelement am Ende des Bewegungsbereichs auf der Gewindestange angelangt ist. Um sicherzustellen, dass das Schäumelement nach der Bewegungsumkehr des Motors wieder in Eingriff mit der Gewindestange gelangt, also das Gewinde wieder "findet", sind zwei elastische Elemente in Form von kurzen, um die Führungsstange herum gewundenen Schraubenfedern 143, 144 vorgesehen, die das Schäumelement in Richtung des Gewindebereichs 137 der Führungsstange 131 drücken, wenn sich das Schäumelement im Bereich eines der Freistiche 138, 138' befindet. Während diese Schraubenfedern im vorliegenden Beispiel mit dem Schäumelement 140 verbunden sind und in zentralen Sacklöchern des Trägers 141 gehalten sind, können die Federn auch frei auf der Führungsstange verschiebbar oder mit der Führungsstange bzw. einem zur Führungsstange unbeweglichem Element verbunden sein. Auch andere Arten von elastischen Elementen als Schraubenfedern sind denkbar.

### Bezugszeichenliste

- 1: Antriebseinheit
- 11: Gehäuseunterteil
- 12: Gehäuseoberteil
- 13: Motor
- 14: Batterie
- 15: Druckschalter
- 16: Motorwelle
- 17: Antriebszahnrad
- 18: Aufnahmebuchse
- 19: Auflagefläche

- 2: Gefäss
- 21: Boden
- 22: Seitenwand
- 23: Oberkante

- 3: Schäumeinheit
- 30: Führungsstange
- 31: Gewindebereich
- 32: Verdickung
- 33: Zahnrad
- 34: Klemmring
- 35: Lagerbereich
- 36, 36': Mitnehmerstange
- 37: distales Lagerelement
- 38: Längsachse
- 40: Schäumelement
- 41: Führungsmutter
- 42: Haltesteg
- 43: Haltering
- 44: Schraubenfeder
- 45: Durchgangsöffnung
- 110: Basiseinheit
- 111: Unterteil/Antriebseinheit
- 112: Boden
- 113: Seitenwand
- 114: Trennwand/Gefässboden
- 115: Handgriff
- 116: oberer Seitenwandbereich
- 117: Motor
- 118: Motorwelle
- 119: Gefäss
- 120: Silikoneinsatz
- 121: Boden
- 122: Seitenwand
- 123: oberer Randbereich
- 130: Schäumeinheit
- 131: Gewindestange
- 132: oberes Lagerelement
- 133: Trägerrad
- 136, 136': Mitnehmerstange
- 137: oberer Freistich
- 138: unterer Freistich
- 140: Schäumelement
- 141: Träger
- 142: Schraubenfeder
- 143: obere Anschlagfeder
- 144: untere Anschlagfeder
- 150: Sockel
- 160: Magneteinheit
- 161, 162: Magnetpol
- 170: Magneteinheit
- 171,172: Magnetpol
- 180: Deckel
- 181: Deckwand
- 182: Randbereich
- 183: Deckelknauf/Knopf

## Patentansprüche

1. Vorrichtung zum Aufschäumen eines flüssigen Lebensmittels, umfassend eine Antriebseinheit (1; 111) sowie eine damit zusammenwirkende Schäumeinheit (3; 130), **dadurch gekennzeichnet, dass** die Schäumeinheit (3; 130) aufweist:
eine Führungsstange (30; 131), die sich mit ihrer Längsachse (38; 139) entlang einer Längsrichtung erstreckt und die entlang zumindest eines Abschnitts als Gewindestange (31; 137) ausgebildet ist;
ein Schäumelement (40; 140), welches mit der Führungsstange (30; 131) in einem Gewindeeingriff steht und entlang einer Schraubenbahn auf der Führungsstange (30; 131) bewegbar ist; sowie
mindestens einen Mitnehmer (36, 36'; 136, 136'), der durch die Antriebseinheit (1; 111) zu einer Kreisbewegung um die Längsachse (38; 139) der Führungsstange (30; 131) herum antreibbar ist und der derart angeordnet ist, dass das Schäumelement (40; 140) durch die Kreisbewegung des Mitnehmers (36, 36'; 136, 136') zu einer Schraubbewegung auf der Führungsstange (30; 131) antreibbar ist.

2. Vorrichtung nach Anspruch 1, wobei die Antriebseinheit (1; 111) einen elektrischen Motor (13; 117) sowie eine Steuereinheit umfasst, welche dazu ausgebildet ist, die Drehrichtung des Motors (13; 117) periodisch umzukehren, um auf diese Weise eine periodische Aufwärts- und Abwärtsbewegung des Schäumelements (40; 140) entlang der Schraubenbahn zu erreichen.

3. Vorrichtung nach Anspruch 1 oder 2, wobei der Mitnehmer (36, 36'; 136, 136') als Mitnehmerstange ausgebildet ist, die sich im Wesentlichen parallel zur Längsachse (38; 139) der Führungsstange (30; 131) erstreckt und die entlang der Längsrichtung verschiebbar mit dem Schäumelement (40; 140) verbunden ist.

4. Vorrichtung nach Anspruch 3, wobei zwei Mitnehmerstangen vorhanden sind, die bezüglich der Längsachse (38; 139) auf diametral gegenüberliegenden Seiten der Führungsstange (30; 131) angeordnet sind.

5. Vorrichtung nach Anspruch 3 oder 4, wobei die Mitnehmerstange an ihrem von der Antriebseinheit (1) entfernten distalen Ende mit einem distalen Lagerelement (37) verbunden ist, welches drehbar auf der Führungsstange (30) geführt ist.

6. Vorrichtung nach einem der vorhergehenden Ansprüche, wobei das Schäumelement eine toroidal gebogene Schraubenfeder (44; 142) umfasst, welche die Längsachse der Führungsstange (30; 131) umgebend angeordnet ist und mit einem Trägerelement (41; 141) verbunden ist, welches im Gewindeeingriff mit der Führungsstange (30; 131) steht.

7. Vorrichtung nach einem der vorhergehenden Ansprüche, wobei die Führungsstange (131) in mindestens einem Bereich, der an einen als Gewindestange (137) ausgebildeten Abschnitt angrenzt, einen Freistich (138; 138') aufweist, der es dem Schäumelement (140) erlaubt, im Bereich des Freistichs (138; 138') frei zu drehen, ohne dabei eine Schraubenbewegung auszuführen.

8. Vorrichtung nach Anspruch 7, welche mindestens ein elastisches Element (143; 144) aufweist, um auf das Schäumelement eine Kraft in Richtung des als Gewindestange (137) ausgebildeten Abschnitts der Führungsstange (131) auszuüben, wenn sich das Schäumelement (140) im Bereich des Freistichs befindet.

9. Vorrichtung nach Anspruch 8, wobei das elastische Element eine Schraubenfeder (143; 144) mit einer Mehrzahl von Windungen umfasst, die sich um die Führungsstange (131) herum erstrecken.

10. Vorrichtung nach einem der vorhergehenden Ansprüche, wobei der Mitnehmer (36) an seinem der Antriebseinheit (1) zugewandten proximalen Ende starr mit einem Zahnrad (33) verbunden ist, welches drehbar auf der Führungsstange (30) gelagert ist und welches in Eingriff mit einem vom Motor antreibbaren Antriebszahnrad (17) bringbar ist.

11. Vorrichtung nach einem der Ansprüche 1 bis 9, wobei die Antriebseinheit (111) und die Schäumeinheit (130) derart zusammenwirken, dass durch einen magnetischen Effekt ein Drehmoment von der Antriebseinheit (111) auf den Mitnehmer (136; 136') der Schäumeinheit ausübbar ist.

12. Vorrichtung nach Anspruch 11, wobei die Antriebseinheit (111) einen elektrischen Motor (117) und ein erstes magnetisches Übertragungselement (160) mit mindestens einem Permanentmagneten aufweist, welches durch den elektrischen Motor um eine Drehbewegung um die Längsachse der Führungsstange (131) antreibbar ist.

13. Vorrichtung nach Anspruch 11 oder 12, wobei die Schäumeinheit ein zweites magnetisches Übertragungselement (170) mit mindestens einem Permanentmagneten aufweist, welches drehbar um die Längsachse der Führungsstange (131) angeordnet und mit dem Mitnehmer (136; 136') der Schäumeinheit (130) verbunden ist.

14. Vorrichtung nach einem der Ansprüche 11 bis 13, welche ein nach oben offenes Gefäss (119) zur Aufnahme des aufzuschäumenden flüssigen Lebensmittels aufweist, wobei das Gefäss einen Boden (114) und eine umlaufende Seitenwand (113) aufweist, wobei die Antriebseinheit (111) unterhalb des Bodens (114) des Gefässes (119) angeordnet ist, und wobei sich die Schäumeinheit (130) von oben her in das Gefäss (119) hinein erstreckt.

15. Vorrichtung nach Anspruch 14, welche einen Deckel (180) umfasst, der dazu ausgebildet ist, derart auf dem Gefäss angeordnet zu werden, dass der Deckel (180) das Gefäss (119) von oben her mindestens teilweise überdeckt, und wobei die Schäumeinheit (130) am Deckel (180) befestigt ist.

## Claims

1. An apparatus for frothing a liquid food product, comprising a drive unit (1; 111) and a frothing unit (3; 130) which interacts with said drive unit, **characterized in that** the frothing unit (3; 130) comprises:
a guide rod (30; 131) which extends, by way of its longitudinal axis (38; 139), along a longitudinal direction and which is in the form of a threaded rod (31; 137) along at least one portion;
a frothing element (40; 140) which is in threaded engagement with the guide rod (30; 131) and is movable along a helical path on the guide rod (30; 131); and
at least one driver (36, 36'; 136, 136') adapted to be driven with a circular movement about the longitudinal axis (38; 139) of the guide rod (30; 131) by the drive unit (1; 111) and arranged in such a way that the frothing element (40; 140) is adapted to be driven with a helical movement on the guide rod (30; 131) by the circular movement of the driver (36, 36'; 136, 136').

2. The apparatus as claimed in claim 1, wherein the drive unit (1; 111) comprises an electric motor (13; 117) and a control unit which is designed to periodically reverse the direction of rotation of the motor (13; 117) in order to thus attain a periodic upward and downward movement of the frothing element (40; 140) along the helical path.

3. The apparatus as claimed in claim 1 or 2, wherein the driver (36, 36'; 136, 136') is in the form of a driver rod which extends substantially parallel to the longitudinal axis (38; 139) of the guide rod (30; 131) and which is connected to the frothing element (40; 140) such that it can be displaced along the longitudinal direction.

4. The apparatus as claimed in claim 3, wherein two driver rods are provided, said driver rods being arranged on diametrically opposite sides of the guide rod (30; 131) in relation to the longitudinal axis (38; 139).

5. The apparatus as claimed in claim 3 or 4, wherein the driver rod, at its distal end which is remote from the drive unit (1), is connected to a distal bearing element (37) which is rotatably guided on the guide rod (30).

6. The apparatus as claimed in one of the preceding claims, wherein the frothing element comprises a toroidally bent helical spring (44; 142) which is arranged so as to surround the longitudinal axis of the guide rod (30; 131) and is connected to a support element (41; 141) which is in threaded engagement with the guide rod (30; 131).

7. The apparatus as claimed in one of the preceding claims, wherein the guide rod (131) has a recess (138; 138') in at least one region which adjoins a portion which is in the form of a threaded rod (137), said recess allowing the frothing element (140) to rotate freely in the region of the recess (138; 138') without executing a helical movement.

8. The apparatus as claimed in claim 7, comprising at least one elastic element (143; 144) for exerting a force on the frothing element in the direction of that portion of the guide rod (131) which is in the form of a threaded rod (137) when the frothing element (140) is in the region of the recess.

9. The apparatus as claimed in claim 8, wherein the elastic element comprises a helical spring (143; 144) with a plurality of turns which extend around the guide rod (131).

10. The apparatus as claimed in one of the preceding claims, wherein the driver (36), at its proximal end which faces the drive unit (1), is rigidly connected to a gear wheel (33) which is rotatably mounted on the guide rod (30) and which is adapted to engage with a drive gear wheel (17) which can be driven by the motor.

11. The apparatus as claimed in one of claims 1 to 9, wherein the drive unit (111) and the frothing unit (130) interact in such a way that a torque is exerted by the drive unit (111) on the driver (136; 136') of the frothing unit on account of a magnetic effect.

12. The apparatus as claimed in claim 11, wherein the drive unit (111) comprises an electric motor (117) and a first magnetic transmission element (160) having at least one permanent magnet which can be driven with a rotary movement about the longitudinal axis of the guide rod (131) by the electric motor.

13. The apparatus as claimed in claim 11 or 12, wherein the frothing unit comprises a second magnetic transmission element (170) having at least one permanent magnet which is arranged rotatably about the longitudinal axis of the guide rod (131) and is connected to the driver (136; 136') of the frothing unit (130).

14. The apparatus as claimed in one of claims 11 to 13, comprising a vessel (119), which is open at the top, for accommodating the liquid food product to be frothed, wherein the vessel has a base (114) and a circumferential side wall (113), wherein the drive unit (111) is arranged beneath the base (114) of the vessel (119), and wherein the frothing unit (130) extends into the vessel (119) from above.

15. The apparatus as claimed in claim 14, which comprises a cover (180) which is designed to be arranged on the vessel in such a way that the cover (180) at least partially covers the vessel (119) from above, and wherein the frothing unit (130) is attached to the cover (180).

## Revendications

1. Dispositif pour faire mousser un aliment liquide, comprenant une unité d'entraînement (1; 111) ainsi qu'une unité de moussage (3; 130) coopérant avec celle-ci, **caractérisé en ce que** l'unité de moussage (3; 130) présente :
une tige de guidage (30; 131), qui s'étend avec son axe longitudinal (38; 139) le long d'une direction longitudinale et qui est réalisée sous la forme d'une tige filetée (31; 137) le long d'au moins une partie ;
un élément de moussage (40; 140), qui se trouve en prise vissée avec la tige de guidage (30; 131) et qui est mobile le long d'un chemin hélicoïdal sur la tige de guidage (30; 131) ; ainsi
qu'au moins un entraîneur (36, 36'; 136, 136'), qui peut être entraîné en un mouvement circulaire autour de l'axe longitudinal (38; 139) de la tige de guidage (30; 131) par l'unité d'entraînement (1; 111) et qui est disposé de telle manière que l'élément de moussage (40; 140) puisse être entraîné en un mouvement hélicoïdal sur la tige de guidage (30; 131) par le mouvement circulaire de l'entraîneur (36, 36'; 136, 136').

2. Dispositif selon la revendication 1, dans lequel l'unité d'entraînement (1; 111) comprend un moteur électrique (13; 117) ainsi qu'une unité de commande, qui est réalisée de façon à inverser périodiquement le sens de rotation du moteur (13; 117), afin d'obtenir de cette manière un mouvement périodique de montée et de descente de l'élément de moussage (40; 140) le long du chemin hélicoïdal.

3. Dispositif selon la revendication 1 ou 2, dans lequel l'entraîneur (36, 36'; 136, 136') est réalisé sous la forme d'une tige d'entraînement, qui s'étend essentiellement parallèlement à l'axe longitudinal (38; 139) de la tige de guidage (30; 131) et qui est relié à l'élément de moussage (40; 140) de façon coulissante le long de la direction longitudinale.

4. Dispositif selon la revendication 3, dans lequel il se trouve deux tiges d'entraînement, qui sont disposées sur des côtés diamétralement opposés de la tige de guidage (30; 131) par rapport à l'axe longitudinal (38; 139).

5. Dispositif selon la revendication 3 ou 4, dans lequel la tige d'entraînement est assemblée, à son extrémité distale éloignée de l'unité d'entraînement (1), à un élément de palier distal (37), qui est guidé de façon rotative sur la tige de guidage (30).

6. Dispositif selon l'une quelconque des revendications précédentes, dans lequel l'élément de moussage comprend un ressort hélicoïdal (44 ; 142) incurvé en tore, qui est disposé autour de l'axe longitudinal de la tige de guidage (30; 131) et qui est attaché à un élément de support (41; 141), qui est en prise vissée avec la tige de guidage (30; 131).

7. Dispositif selon l'une quelconque des revendications précédentes, dans lequel la tige de guidage (131) présente, dans au moins une zone qui est adjacente à une partie réalisée sous la forme d'une tige filetée (137), une gorge de dégagement (138; 138') qui permet à l'élément de moussage (140) de tourner librement dans la zone de la gorge de dégagement (138; 138'), sans effectuer à cette occasion un mouvement hélicoïdal.

8. Dispositif selon la revendication 7, qui présente au moins un élément élastique (143; 144) destiné à exercer sur l'élément de moussage une force orientée en direction de la partie de la tige de guidage (131) réalisée sous la forme d'une tige filetée (137), lorsque l'élément de moussage (140) se trouve dans la région de la gorge de dégagement.

9. Dispositif selon la revendication 8, dans lequel l'élément élastique comprend un ressort hélicoïdal (143; 144) comportant une multiplicité de spires, qui s'étendent autour de la tige de guidage (131).

10. Dispositif selon l'une quelconque des revendications précédentes, dans lequel l'entraîneur (36) est rigidement relié, par son extrémité proximale tournée vers l'unité d'entraînement (1), à une roue dentée (33), qui est montée de façon rotative sur la tige de guidage (30) et qui peut être mise en prise avec une roue dentée motrice (17) pouvant être entraînée par le moteur.

11. Dispositif selon l'une quelconque des revendications 1 à 9, dans lequel l'unité d'entraînement (111) et l'unité de moussage (130) coopèrent de telle manière qu'un couple de rotation puisse être exercé, par un effet magnétique, par l'unité d'entraînement (111) sur l'entraîneur (136; 136') de l'unité de moussage.

12. Dispositif selon la revendication 11, dans lequel l'unité d'entraînement (111) présente un moteur électrique (117) et un premier élément de transmission magnétique (160) avec au moins un aimant permanent, qui peut être entraîné par le moteur électrique en un mouvement de rotation autour de l'axe longitudinal de la tige de guidage (131).

13. Dispositif selon la revendication 11 ou 12, dans lequel l'unité de moussage présente un deuxième élément de transmission magnétique (170) avec au moins un aimant permanent, qui est disposé de façon rotative autour de l'axe longitudinal de la tige de guidage (131) et qui est relié à l'entraîneur (136; 136') de l'unité de moussage (130).

14. Dispositif selon l'une quelconque des revendications 11 à 13, qui présente un récipient (119) ouvert vers le haut destiné à recevoir l'aliment liquide à faire mousser, dans lequel le récipient présente un fond (114) et une paroi latérale périphérique (113), dans lequel l'unité d'entraînement (111) est disposée en dessous du fond (114) du récipient (119) et dans lequel l'unité de moussage (130) s'étend par le haut à l'intérieur du récipient (119).

15. Dispositif selon la revendication 14, qui comprend un couvercle (180), qui est réalisé de façon à être disposé sur le récipient, de telle manière que le couvercle (180) recouvre le récipient (119) au moins partiellement par le haut, et dans lequel l'unité de moussage (130) est fixée au couvercle (180).
